(19) Europäisches Patentamt

European Patent Office

Office européen des brevets

(11) **EP 0 878 045 B1**

(12) **EUROPÄISCHE PATENTSCHRIFT**

| | |
|---|---|
| (45) Veröffentlichungstag und Bekanntmachung des Hinweises auf die Patenterteilung:<br>**18.09.2002   Patentblatt 2002/38** | (51) Int Cl.$^7$: **H02H 3/40** |
| (21) Anmeldenummer: **97907029.9** | (86) Internationale Anmeldenummer:<br>**PCT/DE97/00162** |
| (22) Anmeldetag: **24.01.1997** | (87) Internationale Veröffentlichungsnummer:<br>**WO 97/028594 (07.08.1997 Gazette 1997/34)** |

(54) **DISTANZSCHUTZVERFAHREN**

DISTANCE PROTECTION METHOD

PROCEDE DE PROTECTION DE DISTANCE

| | |
|---|---|
| (84) Benannte Vertragsstaaten:<br>**DE FR GB IT** | (72) Erfinder:<br>• **JURISCH, Andreas**<br>  **D-13587 Berlin (DE)**<br>• **SEZI, Tevfik, Dr.**<br>  **D-12169 Berlin (DE)** |
| (30) Priorität: **31.01.1996  DE 19605025** | |
| (43) Veröffentlichungstag der Anmeldung:<br>**18.11.1998   Patentblatt 1998/47** | (56) Entgegenhaltungen:<br>**EP-A- 0 284 546        WO-A-80/02748**<br>**US-A- 4 321 681** |
| (73) Patentinhaber: **SIEMENS AKTIENGESELLSCHAFT**<br>**80333 München (DE)** | |

**Beschreibung**

Die Erfindung bezieht sich auf ein Distanzschutzverfahren zum Erfassen von Kurzschlüssen auf einem zu überwachenden Abschnitt einer elektrischen Energieversorgungsleitung, bei dem im Kurzschlußfalle aus Strom und Spannung gebildete Impedanzwerte zum Gewinnen eines Auslösesignals dahingehend überprüft werden, ob sie innerhalb einer vorgegebenen Auslösekennlinie liegen.

Ein derartiges Verfahren ist aus dem Buch "Relaisschutztechnik in Elektroenergiesystemen", Dr.-Ing. Heinz Clemenz, Dr.-Ing. Klaus Rothe, VEB Verlag Technik, Berlin, 1980, Seiten 64 bis 66 bekannt. In dem bekannten Verfahren wird der im Kurzschlußfalle aus Strom und Spannung gebildete Impedanzbetrag dahingehend überprüft, ob er innerhalb eines Kreises mit einem Mittelpunkt liegt, der durch den Anfang des zu überwachenden Abschnittes der Energieversorgungsleitung definiert ist. Der Kreisradius wird entsprechend der Größe des zu überwachenden Abschnittes bestimmt. Dieses Verfahren führt ggf. in relativ kurzen Zeiten zum Auslösesignal, hat jedoch den Nachteil, daß die kreisförmige Auslösekennlinie schlecht an die Verhältnisse einer elektrischen Energieversorgungsleitung angepaßt ist; bei ungünstiger Wahl des Kreisradius, z. B. eines alle möglichen Kurzschlußfehler auf dem zu überwachenden Leitungsabschnitt erfassenden Wertes, können auch solche Impedanzwerte in der kreisförmigen Auslösekennlinie liegen, die nicht auf einen Kurzschlußfehler zurückzuführen sind, sondern bei bestimmten Lastfällen auftreten. Wenn dagegen der Kreisradius so klein gewählt wird, daß es mit dem Kreis nicht zur Fehlauslösung kommen kann, dann muß im Kauf genommen werden, daß ein Teil der Kurzschlußfehler nicht erfaßt wird. Bei dem bekannten Verfahren wird also eine relativ hohe Auslösegeschwindigkeit erzielt, jedoch kann nur ein Teil der möglichen, auftretenden Kurzschlußfehler erfaßt werden.

Ein weiteres Distanzschutzverfahren ist aus der Betriebsanleitung für die Distanzschutzeinrichtung PD 551 der AEG, Seiten III/29 ff, bekannt. In diesem Verfahren wird eine polygonale Auslösekennlinie verwendet. Die Impedanzwerte werden ihrer Resistanz- und Reaktanzkomponente nach dahingehend überprüft, ob sie innerhalb dieses Polygons liegen. Das Verfahren benötigt relativ viel Zeit zur eventuellen Bildung eines Auslösesignals, da das zur Berechnung der Resistanz- und der Reaktanzkomponente benötigte Datenfenster relativ groß sein muß. Auf der anderen Seite wird bei dem Verfahren mit dem Polygon ein größerer Teil der möglichen, auftretenden Kurzschlußfehler erfaßt als bei dem Verfahren mit dem Kreis, da die polygonale Kennlinie besser an die Verhältnisse der Energieversorgungsleitung angepaßt werden kann.

Der Erfindung liegt die Aufgabe zugrunde, bei einem Distanzschutzverfahren alle möglichen auf einem zu überwachenden Leitungsabschnitt auftretenden Kurzschlußfehler zu erfassen und ggf. ein Auslösesignal zu bilden, und dabei die zur Bildung des Auslösesignals benötigte Zeit im Vergleich zu den bekannten Verfahren zu verringern.

Zur Lösung dieser Aufgabe wird bei einem Distanzschutzverfahren der eingangs erwähnten Art

- eine im Hinblick auf den zu überwachenden Abschnitt der Energieversorgungsleitung relativ klein bemessene erste Auslösekennlinie verwendet und zunächst ermittelte Impedanzwerte werden hinsichtlich dieser ersten Auslösekennlinie dahingehend überprüft, ob sie innerhalb oder außerhalb dieser Auslösekennlinie liegen,
- bei innerhalb der ersten Auslösekennlinie liegenden zunächst ermittelten Impedanzwerten wird das Auslösesignal erzeugt,
- bei außerhalb dieser Auslösekennlinie liegenden zunächst ermittelten Impedanzwerten wird auf eine dem zu überwachenden Abschnitt entsprechende Maximal-Auslösekennlinie umgeschaltet, und
- auf die zunächst ermittelten Impedanzwerte folgende Impedanzwerte werden dahingehend überprüft, ob sie innerhalb der Maximal-Auslösekennlinie liegen, und gegebenenfalls wird das Auslösesignal erzeugt.

Die Verwendung der relativ klein bemessenen Auslösekennlinie als erste Auslösekennlinie führt zunächst zu einem relativ eingeschränkten Schutz für den zu überwachenden Abschnitt, da nicht alle auf diesem Abschnitt auftretenden Fehler erfaßt werden. Allerdings können etwa 80 % der auftretenden Kurzschlußfälle in einer vorteilhaft kurzen Zeit erfaßt werden, weil wegen der zulässigen Ungenauigkeit zur Bildung der Impedanzwerte nur auf relativ wenige Strom- und Spannungsmeßwerte zurückgegriffen zu werden braucht. Für den Fall, daß der aufgetretene Fehler nicht mit der relativ klein bemessenen Auslösekennlinie erfaßt werden konnte, wird auf eine Maximal-Auslösekennlinie umgeschaltet, mit der alle auf dem zu überwachenden Abschnitt auftretenden Fehler erfaßt werden. Das erfindungsgemäße Verfahren gewährleistet also, daß alle auftretenden Fehler in einer optimal kurzen Zeit zur Bildung eines Auslösesignals führen, ohne daß es zu ungewollten Fehlauslösungen kommt.

Bei einer vorteilhaften Ausführungsform des Verfahrens ist erfindungsgemäß vorgesehen, daß

- bei außerhalb der ersten Auslösekennlinie liegenden zunächst ermittelten Impedanzwerten auf eine etwas größer als die erste Auslösekennlinie aber kleiner als die Maximal-Auslösekennlinie bemessene zweite Auslösekennlinie umgeschaltet wird,
- auf die zunächst ermittelten Impedanzwerte folgende weitere Impedanzwerte dahingehend überprüft werden, ob sie innerhalb oder außerhalb dieser zweiten Auslösekennlinie liegen,

- bei innerhalb der zweiten Auslösekennlinie liegenden weiteren Impedanzwerten das Auslösesignal erzeugt wird,
- bei außerhalb der zweiten Auslösekennlinie liegenden weiteren Impedanzwerten auf mindestens eine weitere Auslösekennlinie umgeschaltet wird, die größer als die zweite Auslösekennlinie aber kleiner als die Maximal-Auslösekennlinie ist,
- auf die weiteren Impedanzwerte folgende zusätzliche Impedanzwerte dahingehend überprüft werden, ob sie innerhalb dieser weiteren Auslösekennlinie liegen,
- bei innerhalb dieser weiteren Auslösekennlinie liegenden zusätzlichen Impedanzwerten das Auslösesignal erzeugt wird, und
- bei außerhalb dieser weiteren Auslösekennlinie liegenden zusätzlichen Impedanzwerten zur Maximal-Auslösekennlinie umgeschaltet wird.

Das Umschalten von der ersten auf die zweite Auslösekennlinie bei dem erfindungsgemäßen Verfahren bewirkt, daß bei der Verwendung der zweiten Auslösekennlinie immer noch nicht alle auftretenden Fehler, wie im Falle der Verwendung der Maximal-Auslösekennlinie erfaßt werden, aber immerhin viele der, die nicht mit der ersten Auslösekennlinie erfaßt werden konnten. Die eventuelle Bildung eines Auslösesignals kommt aus dem oben erwähnten Grunde vorteilhafterweise schneller zustande, als wenn der Fehler ohne Verwendung der zweiten Auslösekennlinie erst durch die Verwendung der Maximal-Auslösekennlinie erfaßt würde, weil deren Auswertung einen relativ großen bzw. vergleichsweise größten Zeitbedarf erfordert. Entsprechendes gilt bei dem erfindungsgemäßen Verfahren bei der Umschaltung von der zweiten Auslösekennlinie auf die weitere Auslösekennlinie. Bei dem erfindungsgemäßen Verfahren können. mehr als drei Auslösekennlinien verwendet werden, wobei jede Auslösekennlinie für sich immer etwas größer als die unmittelbar vorher verwendete Auslösekennlinie jedoch kleiner als die Maximal-Auslösekennlinie ist.

Eine weitere vorteilhafte Ausgestaltung des erfindungsgemäßen Verfahrens sieht vor, daß als erste Auslösekennlinie ein Kreis mit einem Mittelpunkt verwendet wird, der durch den Anfang des zu überwachenden Abschnittes der Energieversorgungsleitung definiert ist. Der Vorteil bei der Benutzung des Kreises liegt darin, daß mit dem Kreise auf schnellstem Wege eindeutige Fehler erfaßt werden, weil es ausreicht eine einzige Komponente der Impedanz, nämlich ihren Betrag zu ermitteln, um diese Impedanz in bezug auf den Kreis zu überprüfen.

In einer anderen vorteilhaften Gestaltung des Verfahrens ist erfindungsgemäß vorgesehen, daß

- als erste Auslösekennlinie ein symmetrisch und parallel zur Reaktanzachse beschnittener Kreis mit einem Mittelpunkt verwendet wird, der durch den Anfang des zu überwachenden Abschnittes der Energieversorgungsleitung definiert ist, und
- die zunächst ermittelten Impedanzwerte dahingehend überprüft werden, ob sie ihrem Betrage-und ihrer Resistanzkomponente nach innerhalb der ersten Auslösekennlinie liegen.

Mit der Form dieser ersten Auslösekennlinie können auch weniger eindeutige Kurzschlußfehler als mit der kreisförmigen Kennlinie erfaßt werden. Dagegen erfordert die Ermittlung der Impedanzwerte für die Auslösekennlinie in Form des beschnittenen Kreises mehr Zeit, weil ja hier zwei Komponenten der Impedanz zu bestimmen sind.

Eine andere vorteilhafte Gestaltung des erfindungsgemäßen Verfahrens sieht erfindungsgemäß vor, daß

- als zweite Auslösekennlinie ein symmetrisch und parallel zur Reaktanzachse beschnittener Kreis mit einem Mittelpunkt verwendet wird, der durch den Anfang des zu überwachenden Abschnittes der Energieversorgungsleitung definiert ist, und
- die weiteren Impedanzwerte dahingehend überprüft werden, ob sie ihrem Betrage und ihrer Resistanzkomponente nach innerhalb dieser Auslösekennlinie liegen.

Nach der Verwendung der ersten Kennlinie, die die schnellste Fehlererfassung ermöglicht, wird eine etwas größere Kennlinie verwendet. Diese größere Kennlinie ermöglicht vorteilhafterweise die Erfassung einer größeren Zahl von Fehlern in allerdings etwas längerer Zeit.

Die Gewinnung der Resistanzkomponente der Impedanz bei einer Ausgestaltung des erfindungsgemäßen Verfahrens mit mindestens einer Auslösekennlinie mit beschnittenem Kreis wird vorteilhafterweise derart durchgeführt, daß

- Augenblickswerte des Stromes und der Spannung während mindestens einer halben Periode der Netzschwingung der elektrischen Energieversorgungsleitung gemessen werden,
- aus den Augenblickswerten des Stromes und der Spannung Augenblickswerte der Leistung berechnet werden und durch Integration ein der Wirkleistung proportionaler Wert ermittelt wird,
- die Augenblickswerte des Stromes quadriert und das Integral der quadrierten Augenblickswerte des Stromes ermittelt wird, und

- die Resistanzkomponente der Impedanz aus dem der Wirkleistung proportionalen Wert und dem Wert des Integrals des quadrierten Stromes durch Quotientenbildung erzeugt wird.

Der Vorteil dieser Gewinhungsmethode liegt in ihrer Geschwindigkeit. Diese Geschwindigkeit resultiert aus der relativ geringen Zahl der zur Gewinnung der Resistanzkomponente benötigten Augenblickswerte des Stromes und der Spannung.

Aus den relativ wenigen Augenblickswerten kann auch der Betrag der Impedanz ermittelt werden.

Dies geschieht in vorteilhafter Weise erfindungsgemäß dadurch, daß

- Augenblickswerte der einzelnen Leiterströme und des Erdstroms sowie die Augenblickswerte der Spannungen zwischen jeweils zwei Leiter und zwischen jeweils einem Leiter und Erde digitalisiert und in jeweils einer digitalen Filtereinheit bewertet werden, die aus mindestens einem linearphasigen nichtrekursiven Digitalfilter (FIR-Filter) eines ersten Typs und aus mindestens einem linearphasigen nichtrekursiven Digitalfilter (FIR-Filter) eines zweiten Typs besteht,
- die Bewertung der Augenblickswerte durch die Digitalfilter jeweils ersten oder zweiten Typs eine Phasendrehung derart bewirkt, daß die von den Digitalfiltern ersten Typs einerseits und zweiten Typs andererseits bewerteten Augenblickswerte orthogonal zueinander sind und
- mittels Ermittlung von Real- und Imaginärkomponenten der Amplituden des Stromes und der Spannung für Leiter-Leiterund Leiter-Erde-Schleifen aus den bewerteten Augenblickswerten die Impedanzwerte durch Quotientenbildung erzeugt werden.

Der Vorteil bei dieser erfindungsgemäßen Verfahrensweise besteht in der relativ kurzen Zeit, die zur Bildung des Impedanzbetrages benötigt wird.

Bei der Durchführung des erfindungsgemäßen Distanzschutzverfahrens ist es vorteilhaft, wenn aus fehlerstrategischen Betrachtungen vor der eigentlichen Distanzmessung nur eindeutig fehlerbehaftete Leiter-Leiter- oder Leiter-Erde-Schleifen ausgewählt werden und danach deren Impedanzwerte in bezug auf die erste oder ggf. zweite Auslösekennlinie überprüft werden. Eine Schleife ist beispielsweise nicht eindeutig fehlerbehaftet, wenn sich in ihr als Folge eines Lichtbogens der Strom ändert. Solche nicht eindeutig fehlerbehafteten Schleifen werden erst nach der Verwendung der ersten oder ggf. zweiten Auslösekennlinie bezüglich ihrer Impedanzwerte untersucht. In manchen Fällen verschwindet die Ursache für den nicht eindeutigen Fehler, z. B. der Lichtbogen in relativ kurzer Zeit und führt somit auch bei späteren Messungen nicht zur Bildung des Auslösesignals.

Diese Auswahl der eindeutig fehlerbehafteten Schleifen wird in einer vorteilhaften Gestaltung des Distanzschutzverfahrens erfindungsgemäß dadurch realisiert, daß

- vor einer Überprüfung der Impedanzwerte in bezug auf die erste oder ggf. zweite Auslösekennlinie bei einer Anregung festgestellt wird, ob bei einer dreiphasigen Energieversorgungsleitung

  - eine Leiter-Erde oder eine Leiter-Leiter-Schleife angeregt ist, oder
  - eine Leiter-Leiter-Schleife und gleichzeitig eine Schleife zwischen einem der Leiter der Leiter-Leiter-Schleife und der Erde angeregt sind, oder
  - alle Leiter-Leiter-Schleifen angeregt sind, oder
  - alle Leiter-Leiter- und Leiter-Erde-Schleifen angeregt sind, und

- die Augenblickswerte von Strom und Spannung der festgestellten Schleifen zur Bildung der Impedanzwerte herangezogen werden.

Bei einer erfindungsgemäßen Ausgestaltung des Distanzschutzverfahrens ist es vorteilhaft, wenn für mindestens eine der auf die zweite Auslösekennlinie folgenden Kennlinie eine polygonale Auslösekennlinie verwendet wird. Die polygonale Auslösekennlinie hat hier den Vorteil, daß sie in ihrer Form so gewählt werden kann, daß mit ihr die auf dem zu überwachenden Abschnitt auftretenden Fehler mit vergleichsweise hoher Selektivität erfaßt werden.

Weiterhin ist es vorteilhaft, daß als Maximal-Auslösekennlinie eine polygonale Auslösekennlinie verwendet wird.

Bei der Verwendung einer polygonalen Auslösekennlinie ist es erforderlich, die Resistanz- und die Reaktanzkomponente der Impedanz zur Überprüfung der Impedanzwerte heranzuziehen. Die Reaktanzkomponente kann näherungsweise durch die Induktivitätskomponente ersetzt werden. Demgemäß ist es vorteilhaft, daß

- zur Überprüfung der Impedanzwerte im Hinblick auf die polygonale Auslösekennlinie Augenblickswerte des Stromes und der Spannung digitalisiert und in einer digitalen Filteranordnung bewertet werden, die aus zwei linearphasigen, nichtrekursiven Digitalfiltern (FIR-Filter) eines ersten Typs (mit den Gewichtsfaktoren $h_i$) und aus einem Digitalfilter eines zweiten Typs (mit den Gewichtsfaktoren $g_i$) besteht,

- die einzelnen Gewichtsfaktoren ($h_i$, $g_i$) der FIR-Filter frei vorgegeben werden,
- ein bei der Bewertung entstandener Fehler mittels eines Korrekturfaktors ($k_c$) korrigiert wird, der als Quotient aus den Amplitudengängen bei Nennfrequenz ($H(\Omega_0), G(\Omega_0)$) der FIR-Filter ersten und zweiten Typs gebildet wird, und
- Resistanz- und Induktivitätskomponente der Impedanz aus den korrigierten bewerteten Augenblickswerten ermittelt werden.

Der Vorteil dieser Ausgestaltung des Distanzschutzverfahrens liegt darin, daß die Resistanz- und Induktivitätswerte relativ genau und schnell ermittelt werden können.

Die Genauigkeit der ermittelten Werte kann, wenn im Laufe der Zeit mehr Augenblickswerte des Stromes und der Spannung zur Verfügung stehen, verbessert werden, indem die Zahl der Gewichtsfaktoren erhöht wird. Dies wird erfindungsgemäß dadurch erreicht, daß

- die linearphasigen, nichtrekursiven Digitalfilter (FIR-Filter) jeweils n+1 Gewichtsfaktoren haben, wobei n eine ganze Zahl ist, und
- bei der Überprüfung der Impedanzwerte hinsichtlich der weiteren polygonalen Auslösekennlinie für n ein kleinerer Wert als bei der Überprüfung der Impedanzwerte hinsichtlich der Maximal-Auslösekennlinie herangezogen wird.

Das erfindungsgemäße Verfahren soll im weiteren anhand eines Ausführungsbeispiels einer Anordnung zur Durchführung des Verfahrens mit Figuren 1 bis 5 erläutert werden.

Figur 1 zeigt eine schematische Darstellung eines zu überwachenden Abschnittes einer aus drei Leitern bestehenden elektrischen Energieversorgungsleitung und eine Anordnung zur Durchführung des erfindungsgemäßen Verfahrens an einer Stelle des Abschnittes;
Figur 2 zeigt den zeitlichen Ablauf des dargestellten Distanzschutzverfahrens;
Figur 3 zeigt in einer Impedanzebene dargestellte Auslösekennlinien;
Figur 4 zeigt anhand eines vereinfachten Blockschaltbildes eine Vorgehensweise zum Ermitteln eines Quadrates einer Schleifenstromamplitude;
Figur 5 zeigt ein vereinfachtes Blockschaltbild zur Erhaltung eines Quadrates einer Schleifenspannungsamplitude.

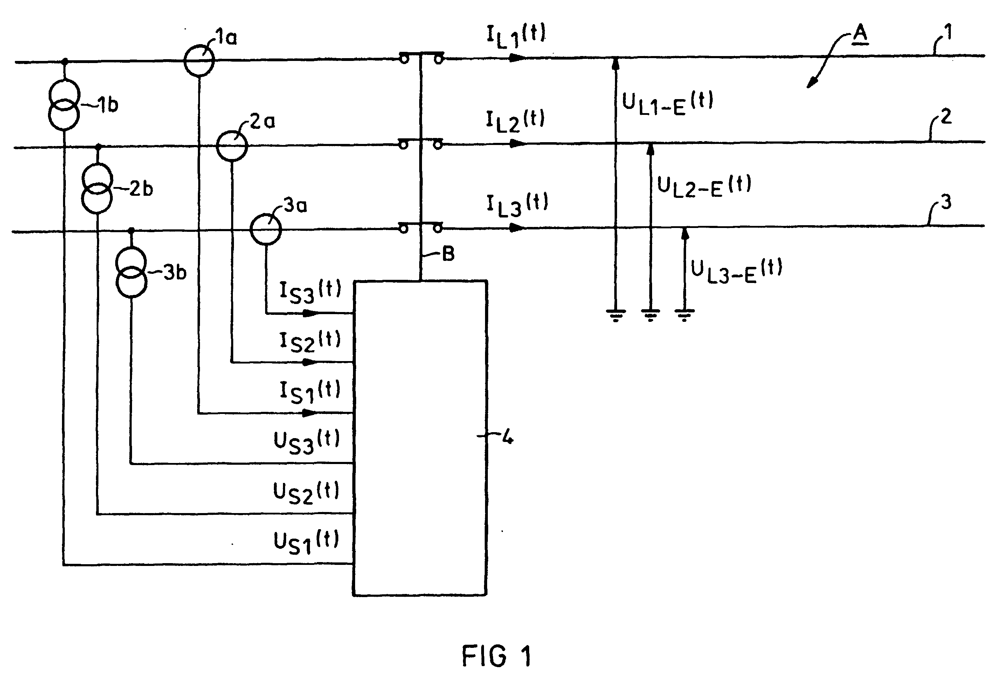

Die Figur 1 zeigt eine schematische Darstellung eines Abschnittes A einer elektrischen Energieversorgungsleitung, die aus drei Leitern 1, 2 und 3 besteht. In diesen Leitern fließen die Wechselströme $I_{L1}(t), I_{L2}(t)$ und $I_{L3}(t)$, die in Stromwandlern 1a, 2a und 3a in Sekundärströme $I_{S1}(t), I_{S2}(t)$ und $I_{S3}(t)$ umgewandelt werden. Wechselspannungen $U_{L1-E}(t), U_{L2-E}(t)$ und $U_{L3-E}(t)$ zwischen jeweils den Leitern 1, 2, 3 und Erde werden mittels Spannungswandlern 1b, 2b und 3b abgegriffen und in Sekundärspannungen $U_{S1}(t)$, $U_{S2}(t)$ und $U_{S3}(t)$ umgewandelt. Die Sekundärströme $I_{S1}(t)$, $I_{S2}(t)$ und $I_{S3}(t)$ und die Sekundärspannungen $U_{S1}(t)$, $U_{S2}(t)$ und $U_{S3}(t)$ werden in einer Anordnung zur Durchführung des Distanzschutzverfahrens 4 (Distanzschutzgerät) in Abtastintervallen von beispielsweise 1 ms abgetastet und gespeichert. Ein sekundärer Erdstrom $I_{SE}(t)$ wird je nach Beschaffung der Energieversorgungsleitung abgetastet und gespeichert oder berechnet. Die so abgetasteten und gespeicherten Augenblickswerte der Sekundärströme und -spannungen werden zur Impedanzwertermittlung herangezogen.

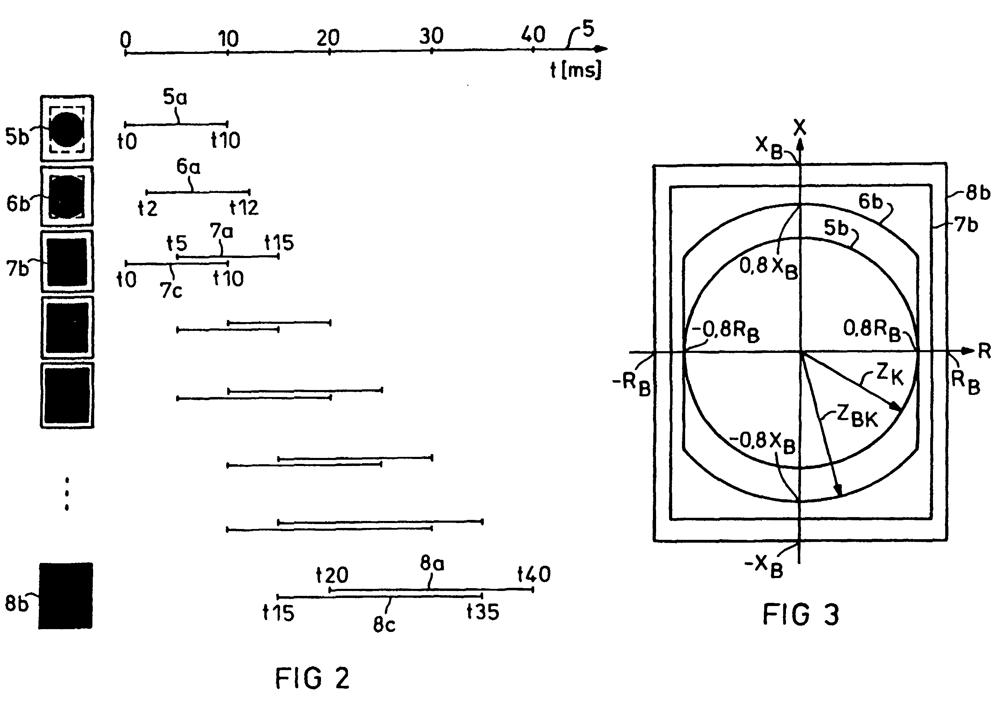

Gemäß Figur 2 ist auf einer Zeitachse 5 die nach Eintritt einer Unregelmäßigkeit auf dem zu überwachenden Abschnitt abgelaufene Zeit in ms eingetragen. Der zur Ermittlung des jeweiligen Fehlers auszuwertende Sekundärstrom und die entsprechende Sekundärspannung werden zunächst in einem Zeitintervall von beispielsweise $t_o = 0ms$ bis $t_{10} = 10ms$ (anhand eines Balkens 5a dargestellt) abgetastet und gespeichert. Aus den gespeicherten Werten wird der Impedanzwert $|Z_S(t_{10})|$ errechnet. Dieser Wert $|Z_S(t_{10})|$ wird dahingehend überprüft, ob er innerhalb oder außerhalb einer ersten Auslösekennlinie 5b, die mit einem Kreis dargestellt ist, liegt. Für den Fall, daß der zunächst ermittelte Impedanzwert $|Z_S(t_{10})|$ innerhalb der Auslösekennlinie 5b liegt, wird ein Auslösesignal zum Auslösen eines Leistungsschalters B erzeugt.

Liegt der zunächst ermittelte Impedanzwert $|Z_S(t_{10})|$ außerhalb der Auslösekennlinie 5b, dann wird kein Auslösesignal an Leistungsschalter B abgegeben.

Diese Ermittlung und Überprüfung von Impedanzwerten wird in der Regel nicht nur für Sekundärströme und -spannungen einer Leiterschleife durchgeführt, sondern entsprechend der jeweiligen Anregung des Distanzschutzgerätes 4 für Sekundärströme und -spannungen weiterer durch Kurzschlüsse gebildete und demzufolge angeregter Leiterschleifen vorgenommen.

Wenn die zunächst ermittelten Impedanzwerte sämtlich außerhalb der Auslösekennlinie 5b liegen, wird eine zweite Auslösekennlinie 6b in Form eines symmetrisch und parallel zur Reaktanzachse X (vgl. Fig. 3) abgeschnittenen Kreises herangezogen. Während eines weiteren Zeitintervalls 6a von beispielsweise $t_2$ = 2$ms$ bis $t_{12}$ = 12$ms$ abgetastete und gespeicherte Sekundärströme und -spannungen einer fehlerbehafteten Schleife werden zur Ermittlung eines weiteren Impedanzwertes $Z_S(t_{12})$ verwendet, der durch seinen Betrag $|Z_S(t_{12})|$ und seine Resistanzkomponente $Z_{SR}(t_{12})$ charakterisiert ist. Dieser weitere Impedanzwert wird dahingehend überprüft, ob er innerhalb oder außerhalb der zweiten Auslösekennlinie 6b liegt. Im ersten Falle wird ein Auslösesignal erzeugt. Anderenfalls wird kein Auslösesignal gebildet, sondern auf eine weitere Auslösekennlinie 7b übergegangen.

Die weitere Auslösekennlinie 7b ist ein Polygon. Der zur Ermittlung des jeweiligen Fehlers auszuwertende Sekundärstrom und die entsprechende Sekundärspannung werden im zusätzlichen Zeitintervall 7a ($t_5$ = 5$ms$ bis $t_{15}$ = 15$ms$) und im Zeitintervall 7c ($t_0$ = 0$ms$ bis $t_{10}$ = 10$ms$), das dem Intervall 5a entspricht, abgetastet und gespeichert; die gespeicherten Werte werden zur Ermittlung eines zusätzlichen Impedanzwertes $Z_S(t_{15})$ verwendet, der durch seine Resistanzkomponente $Z_{SR}(t_{15})$ und seine Induktivitätskomponente $Z_{SL}(t_{15})$ charakterisiert ist. Dieser zusätzliche Impedanzwert wird dahingehend überprüft, ob er innerhalb oder außerhalb der weiteren Auslösekennlinie 7b liegt. In dem als Beispiel beschriebenen Verfahren werden insgesamt acht Auslösekennlinien verwendet. Bei der Verwendung einer Maximal-Auslösekennlinie 8b, die dem zu überwachenden Abschnitt entspricht, werden der zur Ermittlung des jeweiligen Fehlers auszuwertende Sekundärstrom und die entsprechende Sekundärspannung in den Zeitintervallen 8a ($t_{20}$ = 20$ms$ bis $t_{40}$ = 40$ms$) und 8c ($t_{15}$ = 15$ms$ bis $t_{35}$ = 35$ms$) abgetastet und gespeichert.

Figur 3 zeigt die in einer Impedanzebene mit einer Resistanzachse R und einer Reaktanzachse X dargestellten Auslösekennlinien 5b, 6b, 7b und 8b, die in dem als Beispiel beschriebenen Distanzschutzverfahren verwendet werden. Der Schnittpunkt beider Koordinaten-Achsen bezeichnet einen Anfang des zu überwachenden Abschnitts A der Energieversorgungsleitung. Die Maximal-Auslösekennlinie 8b ist ein rechteckiges Polygon mit Maximalwerten der Resistanz (-$R_B$,+$R_B$) und der Reaktanz (-$X_B$, +$X_B$). Dagegen ist die erste Auslösekennlinie 5b relativ klein bemessen und hat einen Radius von $Z_K$ = 0,8 · MIN($R_B$, $X_B$), wobei MIN($R_B$, $X_B$) den kleinsten der zwei Werte von $R_B$ und $X_B$ liefert. Als zweite Auslösekennlinie 6b wird der symmetrisch und parallel zur Reaktanzachse X an den Stellen 0,8 ·$R_B$ und 0,8·(-$R_B$) beschnittene Kreis mit einem Radius $Z_{BK}$ = 0,8·$X_B$ verwendet. Die Auslösekennlinie 7b liegt zwischen den Kennlinien 6b und 8b. Darüber hinaus werden im Beispiel zusätzliche Polygone, die nicht abgebildet sind, verwendet. Diese zusätzlichen Polygone sind jeweils größer als das Polygon 7b aber kleiner als die Maximal-Auslösekennlinie 8b.

Bei der Durchführung des erfindungsgemäßen Verfahrens unter Benutzung der Auslösekennlinie 5b ist als Impedanzwert der Impedanzbetrag $|Z_S|$ zu ermitteln. Dieser ergibt sich für eine jeweils angeregte Schleife aus den Quadraten der zugehörigen Spannungsamplitude $\hat{U}_{Schleife}$ und der zugehörigen Stromamplitude $\hat{I}_{Schleife}$.

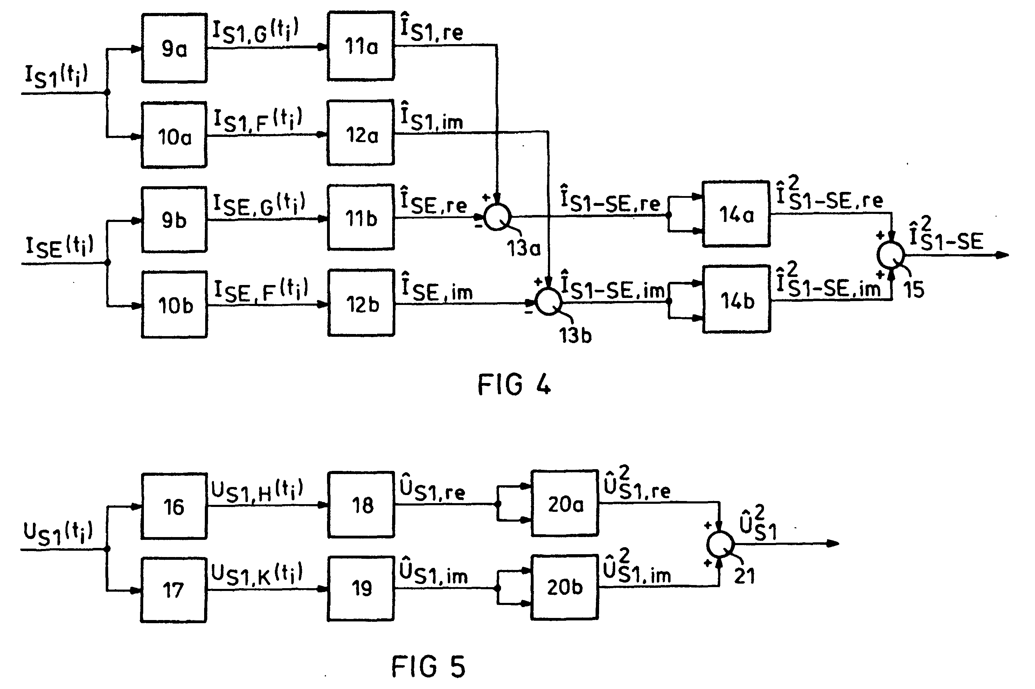

Die Quadrate der Stromamplituden werden nach einem in Figur 4 dargestellten Blockschaltbild gebildet. Als Beispiel ist die Bildung des Quadrats der Amplitude $\hat{I}_{S1-SE}$ eines Stromes in einer Leiter-Erde-Schleife dargestellt, die aus dem Leiter 1 und Erde besteht. Abgetastete Augenblickswerte $I_{S1}(t_i)$ und $I_{SE}(t_i)$ des Sekundärstromes $I_{S1}$ bzw. $I_{SE}$ werden jeweils in frequenzselektiven Signalverstärkern 9a und 9b zu $I_{S1,G}(t_i)$ und $I_{SE,G}(t_i)$ und in frequenzselektiven Signalverstärkern 10a und 10b zu $I_{S1,F}(t_i)$ und $I_{SE,F}(t_i)$ verstärkt und normiert. Die verstärkten und normierten Signale werden anschließend in linearphasigen nichtrekursiven Digitalfiltern (FIR-Filter) eines ersten Typs (G) 11a und 11b bzw. eines zweiten Typs (F) 12a und 12b bewertet. Die FIR-Filter 11a, 11b, 12a und 12b besitzen jeweils 11 Koeffizienten ($g_0,g_1...,g_{10}$ für 11a bzw. 11b und $f_0,f_1...,f_{10}$ für 12a bzw. 12b).

Die Bewertungen sind die Ergebnisse der diskreten Faltungen der Koeffizienten der FIR-Filter 11a, 11b, 12a und 12b mit den Werten der verstärkten und normierten Signale. Folgende Bewertungen werden erhalten für $I_{S1,G}(t_i)$ und $I_{S1,F}(t_i)$ am Ausgang des G-Filters 11a:

$$\hat{I}_{S1,re}(t_n) = G * I_{S1,G}(t_n)$$

$$= \sum_{k=0}^{10} g_k . I_{S1,G}(t_{n-k})$$

und am Ausgang des F-Filters 12a:

$$\hat{I}_{S1,im}(t_n) = F * I_{S1,F}(t_n)$$

$$= \sum_{k=0}^{10} f_k \cdot I_{S1,F}(t_{n-k})$$

$\hat{I}_{S1,re}(t_n)$ und $\hat{I}_{S1,im}(t_n)$ sind die Real- bzw. Imaginärkomponente der Stromamplitude in der Leitung 1, die zum Zeitpunkt $t_n$ ermittelt werden. Die Koeffizienten der FIR-Filter 11a, 11b, 12a und 12b sind nämlich so gewählt, daß die bewerteten Signale bezüglich ihrer Phase orthogonal zueinander werden.

Entsprechendes wie für $I_{S1,G}(t_i)$ und $I_{S1,F}(t_i)$ gilt auch für $I_{SE,G}(t_i)$ und $I_{SE,F}(t_i)$ am Ausgang des G-Filters 11b:

$$\hat{I}_{SE,re}(t_n) = G * I_{SE,G}(t_n)$$
$$= \sum_{k=0}^{10} g_k \cdot I_{SE,G}(t_{n-k})$$

und am Ausgang des F-Filters 12b:

$$\hat{I}_{SE,im}(t_n) = F * I_{SE,F}(t_n)$$
$$= \sum_{k=0}^{10} f_k \cdot I_{SE,F}(t_{n-k})$$

Die bewerteten Signale werden anschließend in Differenzbildungsbausteinen 13a und 13b nach folgender Vorschrift zur Bildung der Real- bzw. Imaginärkomponente der Schleifenstromamplitude herangezogen:

$$\hat{I}_{S1-SE,re}(t_n) = \hat{I}_{S1,re}(t_n) - Z_e \cdot \hat{I}_{SE,re}(t_n)$$

$$\hat{I}_{S1-SE,im}(t_n) = \hat{I}_{S1,im}(t_n) - Z_e \cdot \hat{I}_{SE,im}(t_n)$$

Der Faktor $Z_e$ berücksichtigt das Verhältnis von Nullimpedanz zu Mitimpedanz nach der Theorie der symmetrischen Komponenten (Roeper, Richard; "Kurschlußströme in Drehstromnetzen, zeitlicher Verlauf und Berechnung der Größen", 6. Auflage Berlin, München, Siemens-Aktiengesellschaft, 1984, Seiten 48 ff). Er berechnet sich aus folgender Formel:

$$Z_e = \sqrt{\frac{\left(1 + \frac{X_E}{X_L}\right)\tan(\varphi_L)^2 + \left(1 + \frac{R_E}{R_L}\right)^2}{\tan^2(\varphi_L) + 1}} - 1$$

wobei die Parameter $X_E$, $X_L$, $R_E$, $R_L$ die Reaktanz bzw. die Resistanz des Nullsystems (E) bzw. des Mitsystems (L) sind und $\varphi_L$ der Phasenwinkel zwischen Mitimpedanz und Resistanzachse ist.

Das Quadrat der Stromamplitude der L1-E Leiter-Erde-Schleife wird anschließend in einem Summierbaustein 15 aus einer Summe von Ausgangssignalen der Quadrierbausteine 14a und 14b gebildet.

$$\hat{I}_{S1-SE}^2(t_n) = \hat{I}_{S1-SE,re}^2(t_n) + \hat{I}_{S1-SE,im}^2(t_n)$$

Der Parameter $t_n$ steht für den Zeitpunkt $t_n$ der Ermittlung des Stromamplitudenquadrates.

Als Beispiel zur Berechnung einer Spannungsamplitude ist in Figur 5 ein Blockschaltbild zur Berechnung des Quadrats der sekundären Spannungsamplitude zwischen dem Leiter 1 und Erde dargestellt. Darin werden abgetastete Augenblickswerte $U_{S1}(t_i)$ der Sekundärspannungen $U_{S1}$ in frequenzselektiven Signalverstärker 16 und 17 verstärkt und normiert. Daraus resultieren Signale $U_{S1,H}(t_i)$ und $U_{S1,K}(t_i)$. Nach einer Bewertung in linearphasigen nichtrekursiven Digitalfiltern (FIR-Filter) eines ersten Typs (H) 18 bzw. eines zweiten Typs (K) 19, die jeweils Koeffizienten $h_1$, $h_2$ ... und $k_1,k_2$... besitzen, werden die Real- und die Imaginärkomponente $\hat{U}_{S1,re}(t_n)$ und $\hat{U}_{S1,im}(t_n)$ der sekundären Spannungsamplitude in der Schleife Leiter 1-Erde erhalten. Die Zahl der Koeffizienten der Filter 18 und 19 kann kleiner als die Zahl der Koeffizienten bei den Filtern 11a, 11b, 12a und 12b sein, um bezüglich der Spannungsermittlung bei Störungen gezielt eine Unterfunktion des Verfahrens zu erreichen Die Bewertung durch die Filter 18 und 19 ergibt:

$$\hat{U}_{S1,re}(t_n) = H^*U_{S1,H}(t_n)$$

und

$$\hat{U}_{S1,im}(t_n) = K^*U_{S1,K}(t_n).$$

Diese Real- und Imaginärkomponenten werden in Quadrierbausteinen 20a und 20b jeweils quadriert und in einen Addierbaustein 21 unter Bildung des sekundären Spannungsamplitudenquadrats addiert.

$$\hat{U}^2_{S1}(t_n) = \hat{U}^2_{S1,re}(t_n) + \hat{U}^2_{S1,im}(t_n).$$

Die folgende Tabelle enthält die Bildungsvorschriften für die schleifenbezogenen Strom- und Spannungsamplituden.

| Leiter-Erde- oder Leiter-Leiter-Schleife | Sekundäre Stromamplitude (Real- und Imaginärkomponente) | Sekundäre Spannungsamplitude (Real- und Imaginärkomponente) |
|---|---|---|
| L1 - E | $\hat{I}_{S1\text{-}SE,re} = G^*\hat{I}_{S1,G} - Z_e \cdot G^*\hat{I}_{SE,G}$ <br> $\hat{I}_{S1\text{-}SE,im} = F^*\hat{I}_{S1,F} - Z_e \cdot F^*\hat{I}_{SE,F}$ | $\hat{U}_{S1,re} = H^*U_{S1,H}$ <br> $\hat{U}_{S1,im} = K^*U_{S1,K}$ |
| L2 - E | $\hat{I}_{S2\text{-}SE,re} = G^*\hat{I}_{S2,G} - Z_e \cdot G^*\hat{I}_{SE,G}$ <br> $\hat{I}_{S2\text{-}SE,im} = F^*\hat{I}_{S2,F} - Z_e \cdot F^*\hat{I}_{SE,F}$ | $\hat{U}_{S2,re} = H^*U_{S2,H}$ <br> $\hat{U}_{S2,im} = K^*U_{S2,K}$ |
| L3 - E | $\hat{I}_{S3\text{-}SE,re} = G^*\hat{I}_{S3,G} - Z_e \cdot G^*\hat{I}_{SE,G}$ <br> $\hat{I}_{S3\text{-}SE,im} = F^*\hat{I}_{S3,F} - Z_e \cdot F^*\hat{I}_{SE,F}$ | $\hat{U}_{S3,re} = H^*U_{S3,H}$ <br> $\hat{U}_{S3,im} = K^*U_{S3,K}$ |
| L1 - L2 | $\hat{I}_{S1\text{-}S2,re} = G^*\hat{I}_{S1,G} - G^*\hat{I}_{S2,G}$ <br> $\hat{I}_{S1\text{-}S2,im} = F^*\hat{I}_{S1,F} - F^*\hat{I}_{S2,F}$ | $\hat{U}_{S1\text{-}S2,re} = H^*U_{S1,H} - H^*U_{S2,H}$ <br> $\hat{U}_{S1\text{-}S2,im} = K^*U_{S1,K} - K^*U_{S2,K}$ |
| L2 - L3 | $\hat{I}_{S2\text{-}S3,re} = G^*\hat{I}_{S2,G} - G^*\hat{I}_{S3,G}$ <br> $\hat{I}_{S2\text{-}S3,im} = F^*\hat{I}_{S2,F} - F^*\hat{I}_{S3,F}$ | $\hat{U}_{S2\text{-}S3,re} = H^*U_{S2,H} - H^*U_{S3,H}$ <br> $\hat{U}_{S2\text{-}S3,im} = K^*U_{S2,K} - K^*U_{S3,K}$ |
| L3 - L1 | $\hat{I}_{S3\text{-}S1,re} = G^*\hat{I}_{S3,G} - G^*\hat{I}_{S1,G}$ <br> $\hat{I}_{S3\text{-}S1,im} = F^*\hat{I}_{S3,F} - F^*\hat{I}_{S1,F}$ | $\hat{U}_{S3\text{-}S1,re} = H^*U_{S3,H} - H^*U_{S1,H}$ <br> $\hat{U}_{S3\text{-}S1,im} = K^*U_{S3,K} - K^*U_{S1,K}$ |

Es versteht sich, daß die in der Tabelle enthaltenen Amplituden immer zu einen Zeitpunkt $t_n$ berechnet werden, zu dem die Impedanzwerte ermittelt werden sollen.

Die Tabelle enthält in der ersten Spalte die Schleife für die, die Strom- und die Spannungsamplitude berechnet werden sollen. Dabei bezeichnet beispielsweise L1-E eine Schleife, die aus dem Leiter 1 und Erde gebildet wird.

In der zweiten Spalte sind die Vorschriften zur Bildung der Real- und Imaginärkomponente der Stromamplitude.

Die dritte Tabellenspalte enthält die Vorschriften zur Bildung der Real- und Imaginärteile der Spannungsamplitude.

Das Quadrat des Impedanzbetrages kann nun für jede Schleife aus den Quadraten der Strom- und Spannungsamplituden der jeweiligen Schleife gebildet werden und mit dem Quadrat der Kippimpedanz $Z_K$, die dem Kreisradius entspricht, verglichen werden. Die Bildung des Impedanzbetrages erfolgt beispielsweise für die L1-E-Schleife folgendermaßen:

$$|Z_{L1\text{-}E}(t_n)|^2 = \frac{\hat{U}^2_{S1}(t_n)}{\hat{I}^2_{S1\text{-}SE}(t_n)}$$

Die Überprüfung des Impedanzbetrages dahingehend, ob er innerhalb des Kreises liegt, kann vorteilhafterweise auch ohne direkte Bildung dieses Impedanzbetrages durch folgenden Vergleich erfolgen:

$$\hat{U}^2_{Schleife} \leq Z^2_K \cdot \hat{I}^2_{Schleife}$$

Dabei wird das Quadrat der Spannungsamplitude in der Schleife als Haltekomponente, das Quadrat der Stromamplitude in der Schleife multipliziert mit dem quadrierten Betrag der Kippimpedanz $Z_K$ als Auslösekomponente bezeichnet.

Bei der Verwendung des symmetrisch und parallel zur Reaktanzachse beschnittenen Kreises werden der Impedanzbetrag und die Resistanzkomponente der Impedanz dahingehend überprüft, ob sie innerhalb der Auslösekennlinie liegen.

Der Impedanzbetrag läßt sich für jede Leiter-Leiter- und Leiter-Erde-Schleife, wie im Falle der Verwendung des Kreises, aus den Strom- und Spannungsamplituden gewinnen. Die Ermittlung der Strom- und Spannungsamplituden aus den abgetasteten Augenblickswerten der Sekundärströme und -spannungen verläuft in ähnlicher Weise wie oben beschrieben.

Die Resistanzkomponente der Impedanz kann aus einem zur Wirkleistung proportionalen Wert und aus Quadraten der abgetasteten Augenblickswerte des Stromes gewonnen werden.

Bei dieser Gewinnungsmethode wird davon ausgegangen, daß allgemein die Spannung U(t) und der Strom I(t) zur Zeit t mit folgenden Sinusfunktionen beschrieben werden:

$$I(t)=\sqrt{2}\cdot\hat{I}\sin(\omega t+\varphi)$$

$$U(t)=\sqrt{2}\cdot\hat{U}\sin(\omega t).$$

Dabei sind $\hat{I}$ und $\hat{U}$ die Strom- und Spannungsamplitude, $\omega$ die Frequenz der Netzschwingung und $\varphi$ die Phasendifferenz zwischen I(t) und U(t).

Das Produkt des Stromes mit der Spannung ergibt folgende Gleichung:

$$I(t)\cdot U(t) = \sqrt{2}\cdot\hat{I}\sin(\omega t + \varphi)\cdot\sqrt{2}\cdot\hat{U}\sin(\omega t).$$

Nach Umformung erhält man

$$I(t)\cdot U(t)=\hat{U}\hat{I}\cos\varphi-\hat{U}\hat{I}\cos(2\omega t+\varphi).$$

Das rechte Glied dieser Gleichung enthält einen Kosinus mit der doppelten Netzschwingungsfrequenz $2\omega$. Dies bedeutet, daß bei einer Integration des Produkts I(t) · U(t) über eine Zeitperiode $T_{2\omega}$, die einer halben Netzschwingungsperiode entspricht, die Werte des Kosinus mit der doppelten Netzschwingungsfrequenz sich zu Null addieren. Die Integration ergibt:

$$\int_{T_{2\omega}} U(t)\cdot I(t)dt = \frac{\pi}{\omega}\hat{U}\hat{I}\cos\varphi \qquad (1)$$

Dieses Integral liefert einen Wert, der proportional zur Wirkleistung

$$P = \hat{U}\hat{I}\cos\varphi$$

ist.

Andererseits kann die Wirkleistung P in bekannter Weise auch mit folgender Gleichung berechnet werden:

$$P = \hat{I}^2 Z_R.$$

Dabei ist $Z_R$ die Resistanzkomponente der Impedanz. Zur Berechnung wird das Quadrat der Augenblickswerte des Stromes benötigt. Dazu wird die Integration quadrierter Augenblickswerte des Stromes über den Zeitraum $T_{2\omega}$ in folgender Gleichung berechnet:

$$\int_{T_{2\omega}} I^2(t)dt = 2\hat{I}^2 \int_{T_{2\omega}} \sin^2(\omega t + \varphi)dt$$

$$= \frac{\pi}{\omega} \hat{I}^2 \qquad\qquad (2)$$

Es folgt, daß die Resistanzkomponente $Z_R$ aus den Werten der Gleichungen (1) und (2) ermittelt werden kann:

$$Z_R = \frac{\int_{T_{2\omega}} U(t) \cdot I(t)dt}{\int_{T_{2\omega}} I^2(t)dt}$$

$$= \frac{\hat{U}\hat{I} \cos \varphi}{\hat{I}^2}$$

Unter Berücksichtigung dieses grundsätzlichen Zusammenhangs wird bei dem erfindungsgemäßen Verfahren zunächst der zur Wirkleistung proportionale Wert ermittelt, wie im folgenden anhand eines Beispiels für die Leiter-Erde-Schleife L1-E erläutert wird:

$$P_{S1-SE,Wirk}(t_n) = \sum_{k=0}^{9} U_{S1}(t_{n-k}) \cdot I_{S1}(t_{n-k})$$

In dieser Gleichung steht auf der linken Seite der zur Wirkleistung proportionale Wert für die Schleife L1-E zum Zeitpunkt $t_n$. Auf der rechten Seite wird das Produkt des Augenblickswertes der sekundären Spannung zwischen Leiter 1 und Erde mit dem Augenblickswert des sekundären Stromes in dem Leiter 1, beide zur Zeit $t_{n-k}$ abgetastet, über Werte von k summiert. Die Summe enthält für die Schleife L1-E alle Augenblickswerte die zwischen $t_{n-9}$ und $t_n$ aufgezeichnet sind und entspricht der Integration über einer halben Periode der Netzschwingung, wenn zehn Abtastungen pro halbe Periode vorgenommen werden.
Für dieselbe Schleife L1-E werden anschließend aus demselben Zeitraum $t_{n-9}$ bis $t_n$ gespeicherte Augenblickswerte des sekundären Stromes quadriert und aufsummiert:

$$I_{\Sigma,S1}^2(t_n) = \sum_{k=0}^{9} I_{S1}^2(t_{n-k})$$

Die Zeit $t_n$ auf der linken Seite gibt wieder an, daß es sich bei der ermittelten Summe um einen Wert zur Gewinnung der Resistanzkomponente zum Zeitpunkt $t_n$ handelt. Die Resistanzkomponente der Schleifenimpedanz berechnet sich mit folgendem Quotienten:

$$Z_{R,S1-SE}(t_n) = \frac{P_{S1-SE,Wirk}(t_n)}{I^2_{\Sigma,S1}(t_n)}$$

Die folgende Tabelle enthält die Bildungsvorschriften der zur Wirkleistung proportionalen Werte und der Summen der sekundären Stromquadrate für jede einzelne Leiter-Leiter- oder Leiter-Erde-Schleife:

| Schleife | $I^2_{\Sigma,Schleife}(t_n) =$ | $P_{Schleife,Wirk}(t_n) =$ |
|---|---|---|
| L1 – E | $\sum_{k=0}^{9} I^2_{S1}(t_{n-k})$ | $\sum_{k=0}^{9} U_{S1}(t_{n-k}) \cdot I_{S1}(t_{n-k})$ |
| L2 – E | $\sum_{k=0}^{9} I^2_{S2}(t_{n-k})$ | $\sum_{k=0}^{9} U_{S2}(t_{n-k}) \cdot I_{S2}(t_{n-k})$ |
| L3 – E | $\sum_{k=0}^{9} I^2_{S3}(t_{n-k})$ | $\sum_{k=0}^{9} U_{S3}(t_{n-k}) \cdot I_{S3}(t_{n-k})$ |
| L1 – L2 | $\sum_{k=0}^{9} \left(I_{S1}(t_{n-k}) - I_{S2}(t_{n-k})\right)^2$ | $\sum_{k=0}^{9} \left(U_{S1}(t_{n-k}) - U_{S2}(t_{n-k})\right) \cdot \left(I_{S1}(t_{n-k}) - I_{S2}(t_{n-k})\right)$ |
| L2 – L3 | $\sum_{k=0}^{9} \left(I_{S2}(t_{n-k}) - I_{S3}(t_{n-k})\right)^2$ | $\sum_{k=0}^{9} \left(U_{S2}(t_{n-k}) - U_{S3}(t_{n-k})\right) \cdot \left(I_{S2}(t_{n-k}) - I_{S3}(t_{n-k})\right)$ |
| L3 – L1 | $\sum_{k=0}^{9} \left(I_{S3}(t_{n-k}) - I_{S1}(t_{n-k})\right)^2$ | $\sum_{k=0}^{9} \left(U_{S3}(t_{n-k}) - U_{S1}(t_{n-k})\right) \cdot \left(I_{S3}(t_{n-k}) - I_{S1}(t_{n-k})\right)$ |

Die Einträge in der ersten Spalte geben die Leiter-Leiter- oder Leiter-Erde-Schleife an. Die zweite Spalte enthält die Bildungsvorschrift für die Summen der sekundären Stromquadrate und die dritte Spalte die Bildungsvorschrift für den zur Wirkleistung proportionalen Wert.

Die Impedanzwerte, d. h. der Impedanzbetrag und die Resistanzkomponente der Impedanz können vorteilhafterweise auch ohne explizit berechnet zu werden, jeweils mit einem Vergleich, der wie folgt aussieht, dahingehend überprüft werden, ob sie innerhalb des beschnittenen Kreises liegen:

- für den Impedanzbetrag

$$\hat{U}^2_{Schleife} \leq Z^2_{BK} \cdot \hat{I}^2_{Schleife}$$

und
- für die Resistanzkomponente

$$P_{Schleife,Wirk} \leq R_{Kipp,bKreis} \cdot I^2_{\Sigma,Schleife}.$$

Die Ungleichung für den Impedanzbetrag wurde oben auch für die Überprüfung des Impedanzbetrages dahingehend, ob er innerhalb eines Kreises liegt, benutzt. Im vorliegenden Falle des beschnittenen Kreises entspricht $Z_{BK}$ dem Radius des beschnittenen Kreises.

In der zweiten Ungleichung steht auf der linken Seite der für die jeweilige Schleife zur Wirkleistung proportionale Wert als Haltekomponente. Das Produkt auf der rechten Seite wird aus einer Kippresistanz und der Summe der Stromamplitudenquadrate gebildet und als Auslösekomponente bezeichnet. Die Kippresistanz entspricht dem positiven Resistanzwert des Schnittpunktes in der Impedanzebene zwischen beschnittenem Kreis und Resistanz-Achse $(0,8 \cdot R_B)$. Im Falle einer Leiter-Erde-Schleife muß diese Kippresistanz mit einem parametrierten Korrekturfaktor folgendermaßen korrigiert werden:

$$R_{Kipp,LE} = \sqrt{\frac{\left(\left(1 + \frac{X_E}{X_L}\right)\tan(\varphi_L)\right)^2 + \left(1 + \frac{R_E}{R_L}\right)^2}{\tan^2(\varphi_L) + 1}} \cdot R_{Kipp,bKreis}$$

Mit dieser Korrektur wird eine vorgegebene Mitsystemimpedanz in eine Schleifenimpedanz umgerechnet. Die Parameter $X_E$, $X_L$, $R_E$, $R_L$ sind die systemspezifische Reaktanz bzw. Resistanz für das Nullsystem (E) und das Mitsystem (L), und $\varphi_L$ ist der Phasenwinkel zwischen Mitimpedanz und Resistanzachse.

Es versteht sich, daß beide Ungleichungen erfüllt sein müssen, um festzustellen, daß die Impedanzwerte innerhalb des beschnittenen Kreises liegen.

In dem hier als Beispiel beschriebenen Distanzschutzverfahren kann ein Anregeblock vorgesehen sein, in dem die Leiter-Leiter- und die Leiter-Erde-Schleifen vor einer Überprüfung deren Impedanzwerte dahingehend, ob sie innerhalb eines Kreises oder eines beschnittenen Kreises liegen, ausgewählt werden, wenn

- nur eine Schleife angeregt ist, oder
- eine Leiter-Leiter-Schleife und gleichzeitig eine Schleife zwischen einem der Leiter der Leiter-Leiter-Schleife und der Erde angeregt sind, oder
- alle Leiter-Leiter-Schleifen angeregt sind, oder
- alle Schleifen angeregt sind.

Die Impedanzwerte der angeregten aber nicht ausgewählten Schleifen werden erst später im Verfahren, wenn es inzwischen nicht schon zum Auslösesignal gekommen ist, bei der Verwendung eines Polygons überprüft.

Bei der Verwendung eines Polygons als Auslösekennlinie sind die zu überprüfenden Komponenten des Impedanzwertes die Resistanz und die Induktivität. Diese werden schleifenbezogen aus den abgetasteten Augenblickswerten der sekundären Ströme und Spannungen gewonnen. Dabei wird davon ausgegangen, daß die sekundären Ströme und Spannungen in den Schleifen sich mit einer Differentialgleichung erster Ordnung folgendermaßen beschreiben lassen:

$$U_{Schleife}(t_n) = L_{Schleife} \frac{dI_{Schleife}(t_n)}{dt} + R_{Schleife} \cdot I_{Schleife}(t_n)$$

Dabei sind $R_{Schleife}$ und $L_{Schleife}$ die zwei unbekannten Komponenten des Impedanzwertes, die ermittelt werden sollen. Es wird also eine ähnliche Gleichung mit $R_{Schleife}$ und $L_{Schleife}$ zu einem Zeitpunkt $t_m$, zu dem die Strom- und Spannungswerte linear unabhängig von den Strom- und Spannungswerten zum Zeitpunkt $t_n$ sind, zur Ermittlung der Komponenten des Impedanzwertes benötigt.

Prinzipiell können die Augenblickswerte des sekundären Stromes und der sekundären Spannung, die zu einem Zeitpunkt $t_n$ abgetastet und gespeichert worden sind, in die Differentialgleichung eingesetzt werden. Die Augenblickswerte sind in der Regel jedoch mit einem großen Meßfehler behaftet, der sich bei der Ermittlung der Komponenten des Impedanzwertes fortpflanzt. Deswegen werden die einzusetzenden sekundären Strom- und Spannungswerte aus mehreren aufeinanderfolgenden Augenblickswerten des sekundären Stromes und der sekundären Spannung gebildet. Wie dabei vorgegangen wird, ist in der Patentschrift EP 0 284 546 A1 offenbart.

Zur Ergänzung des in der EP-Patentschrift offenbarten Verfahrens ist noch die grundsätzliche Vorgehensweise bei der Anwendung des offenbarten Verfahrens in einer Schleife zu erläutern. Die Differentialgleichung wird beispielsweise für die Schleife L1-L2 aufgestellt; dazu werden zunächst $U_{S1}(t_n)$, $I_{S1}(t_n)$ und $\frac{dI_{S1}(t_n)}{dt}$ in dem Leiter 1 ermittelt und danach werden $U_{S2}(t_n)$, $I_{S2}(t_n)$ und $\frac{dI_{S2}(t_n)}{dt}$ in dem Leiter 2 ermittelt. Anschließend werden zwei entsprechende Differentialgleichungen aufgestellt und die zweite wird von der Ersten abgezogen. Folgende Differentialgleichung wird erhalten:

$$U_{S1\text{-}S2}(t_n) = L_{S1\text{-}S2} \cdot \frac{DI_{S1\text{-}S2}(t_n)}{dt} + R_{S1\text{-}S2} \cdot I_{S1\text{-}S2}(t_n).$$

Wie schon erwähnt muß diese Gleichung auch für einen Zeitpunkt $t_m$ aufgestellt werden, um $L_{S1\text{-}S2}$ und $R_{S1\text{-}S2}$ zu bestimmen.

Bei dem in der EP-Patentschrift offenbarten Verfahren werden linearphasige nichtrekursive Digitalfilter (FIR-Filter) eingesetzt. Die Digitalfilter besitzen jeweils eine bestimmte Zahl von Koeffizienten. Diese Zahl ist für jeden eingesetzten Filter gleich und bestimmt die Zahl der Augenblickswerte, die zur Bildung eines Strom- oder Spannungswertes herangezogen werden. Eine Erhöhung der Koeffizientenzahl hat zur Folge, daß die gebildeten Strom- und Spannungswerte mit einem geringeren Meßfehler behaftet werden. Folglich sind die ermittelten Impedanzwerte auch mit einem kleineren Fehler behaftet. Deswegen kann die Zahl der Koeffizienten bei der Verwendung der Maximal-Auslösekennlinie, d. h. des größten Polygons größer als bei der Verwendung eines kleineren Polygons sein.

In dem als Beispiel beschriebenen Distanzschutzverfahren werden bei der Verwendung des Polygons 7b elf Koeffizienten für die FIR-Digitalfilter benutzt, wogegen bei Verwendung der Maximal-Auslösekennlinie 8b FIR-Digitalfilter mit 21 Koeffizienten eingesetzt werden.

**Patentansprüche**

1. Distanzschutzverfahren zum Erfassen von Kurzschlüssen auf einem zu überwachenden Abschnitt (A) einer elektrischen Energieversorgungsleitung, bei dem im Kurzschlußfalle aus Strom und Spannung gebildete Impedanzwerte zum Gewinnen eines Auslösesignals zum Auslösen eines zugeordneten Leistungsschalters (B) dahingehend überprüft werden, ob sie innerhalb einer vorgegebenen Auslösekennlinie liegen,
   **dadurch gekennzeichnet, daß**

   - eine im Hinblick auf die Länge des zu überwachenden Abschnitts (A) der Energieversorgungsleitung relativ klein bemessene erste Auslösekennlinie (5b) verwendet wird und zunächst ermittelte Impedanzwerte ($|Z_S(t_{10})|$) hinsichtlich dieser ersten Auslösekennlinie (5b) dahingehend überprüft werden, ob sie innerhalb oder außerhalb dieser Auslösekennlinie liegen,
   - bei innerhalb der ersten Auslösekennlinie (5b) liegenden zunächst ermittelten Impedanzwerten ($|Z_S(t_{10})|$) das Auslösesignal zum Auslösen des Leistungsschalters (B) erzeugt wird,
   - bei außerhalb dieser Auslösekennlinie (5b) liegenden zunächst ermittelten Impedanzwerten ($|Z_S(t_{10})|$) auf eine etwa der Länge des zu überwachenden Abschnitts (A) entsprechende Maximal-Auslösekennlinie (8b) umgeschaltet wird, und
   - auf die zunächst ermittelten Impedanzwerte nachfolgend erfaßte Impedanzwerte dahingehend überprüft werden, ob sie innerhalb der Maximal-Auslösekennlinie (8b) liegen, und gegebenenfalls das Auslösesignal zum Auslösen des Leistungsschalters (B) erzeugt wird.

2. Distanzschutzverfahren nach Anspruch 1,
   **dadurch gekennzeichnet, daß**

   - bei außerhalb der ersten Auslösekennlinie (5b) liegenden zunächst ermittelten Impedanzwerten ($|Z_S(t_{10})|$) auf eine etwas größer als die erste Auslösekennlinie (5b) aber kleiner als die Maximal-Auslösekennlinie (8b) bemessene zweite Auslösekennlinie (6b) umgeschaltet wird,
   - auf die zunächst ermittelten Impedanzwerte ($|Z_S(t_{10})|$) folgende weitere Impedanzwerte ($Z_S(t_{12})$) dahingehend überprüft werden, ob sie innerhalb oder außerhalb dieser zweiten Auslösekennlinie (6b) liegen,
   - bei innerhalb der zweiten Auslösekennlinie (6b) liegenden weiteren Impedanzwerten ($Z_S(t_{12})$) das Auslösesignal erzeugt wird,
   - bei außerhalb der zweiten Auslösekennlinie (6b) liegenden weiteren Impedanzwerten ($Z_S(t_{12})$) auf mindestens eine weitere Auslösekennlinie (7b) umgeschaltet wird, die größer als die zweite Auslösekennlinie (6b) aber kleiner als die Maximal-Auslösekennlinie (8b) ist,
   - auf die weiteren Impedanzwerte ($Z_S(t_{12})$) folgende zusätzliche Impedanzwerte ($Z_S(t_{15})$) dahingehend überprüft werden, ob sie innerhalb dieser weiteren Auslösekennlinie (7b) liegen,
   - bei innerhalb dieser weiteren Auslösekennlinie (7b) liegenden zusätzlichen Impedanzwerten ($Z_S(t_{15})$) das Auslösesignal erzeugt wird, und
   - bei außerhalb dieser weiteren Auslösekennlinie (7b) liegenden zusätzlichen Impedanzwerten ($Z_S(t_{15})$) zur Maximal-Auslösekennlinie (8b) umgeschaltet wird.

**3.** Distanzschutzverfahren nach Anspruch 1 oder 2,
**dadurch gekennzeichnet, daß**
als erste Auslösekennlinie (5b) ein Kreis mit einem Mittelpunkt verwendet wird, der durch den Anfang des zu überwachenden Abschnittes (A) der Energieversorgungsleitung definiert ist.

**4.** Distanzschutzverfahren nach Anspruch 1 oder 2,
**dadurch gekennzeichnet, daß**

- als erste Äuslösekennlinie ein symmetrisch und parallel zur Reaktanzachse (X) beschnittener Kreis mit einem Mittelpunkt verwendet wird, der durch den Anfang des zu überwachenden Abschnittes (A) der Energieversorgungsleitung definiert ist, und
- die zunächst ermittelten Impedanzwerte dahingehend überprüft werden, ob sie ihrem Betrage und ihrer Resistanzkomponente nach innerhalb der ersten Auslösekennlinie liegen.

**5.** Distanzschutzverfahren nach einem der Ansprüche 2 bis 4,
**dadurch gekennzeichnet, daß**

- als zweite Auslösekennlinie (6b) ein symmetrisch und parallel zur Reaktanzachse (X) beschnittener Kreis mit einem Mittelpunkt verwendet wird, der durch den Anfang des zu überwachenden Abschnittes (A) der Energieversorgungsleitung definiert ist, und
- die weiteren Impedanzwerte ($Z_S(t_{12})$) dahingehend überprüft werden, ob sie ihrem Betrage ($|Z_S(t_{12})|$) und ihrer Resistanzkomponente ($Z_{SR}(t_{12})$) nach innerhalb dieser Auslösekennlinie (6b) liegen.

**6.** Distanzschutzverfahren nach einem der Ansprüche 4 oder 5,
**dadurch gekennzeichnet, daß**

- zum Gewinnen der Resistanzkomponente ($Z_R$)

    - Augenblickswerte ($I_{S1}(t_{n-k})$), ($U_{S1}(t_{n-k})$) des Stromes und der Spannung während mindestens einer halben Periode ($T_{2\omega}$) der Netzschwingung der elektrischen Energieversorgungsleitung gemessen werden,
    - aus den Augenblickswerten ($I_{S1}(t_{n-k})$, $U_{S1}(t_{n-k})$) des Stromes und der Spannung Augenblickswerte der Leistung berechnet werden und durch Integration ein der Wirkleistung proportionaler Wert ($P_{S1\text{-}SE,Wirk}(t_n)$) ermittelt wird,
    - die Augenblickswerte ($I_{S1}(t_{n-k})$) des Stromes quadriert und das Integral der quadrierten Augenblickswerte des Stromes ($I^2_{\Sigma,S1}(t_n)$) ermittelt wird, und
    - die Resistanzkomponente ($Z_R$) der Impedanz aus dem der Wirkleistung proportionalen Wert ($P_{S1\text{-}SE,Wirk}(t_n)$) und dem Wert des Integrals ($I^2_{\Sigma,S1}(t_n)$) des quadrierten Stromes durch Quotientenbildung erzeugt wird.

**7.** Distanzschutzverfahren nach einem der Ansprüche 3 bis 6,
**dadurch gekennzeichnet, daß**

- zum Bilden der Impedanzwerte ($|Z_{L1\text{-}E}(t_n)|$)

    - die Augenblickswerte ($I_{S1}(t_i)$, $I_{SE}(t_i)$) der einzelnen Leiterströme und des Erdstroms sowie die Augenblickswerte ($U_{S1}(t_i)$) der Spannungen zwischen jeweils zwei Leiter und zwischen jeweils einem Leiter und Erde digitalisiert und in jeweils einer digitalen Filtereinheit bewertet werden, die aus mindestens einem linearphasigen nichtrekursiven Digitalfilter (FIR-Filter) eines ersten Typs (11a, 11b, 18) und aus mindestens einem linearphasigen nichtrekursiven Digitalfilter (FIR-Filter) eines zweiten Typs (12a, 12b, 19) besteht.
    - die Bewertung der Augenblickswerte durch die Digitalfilter jeweils ersten oder zweiten Typs (11a, 11b, 12a, 12b, 18, 19) eine Phasendrehung derart bewirkt, daß die von den Digitalfiltern ersten Typs (11a, 11b, 18) einerseits und zweiten Typs (12a, 12b, 19) andererseits bewerteten Augenblickswerte ($\hat{I}_{S1,re}$, $\hat{I}_{SE,re}$, $\hat{U}_{S1,re}$ und $\hat{I}_{S1,im}$, $\hat{I}_{SE,im}$, $\hat{U}_{S1,im}$) orthogonal zueinander sind und
    - mittels Ermittlung von Real- und Imaginärkomponenten der Amplituden des Stromes ($\hat{I}_{S1\text{-}SE,re}$, $\hat{I}_{S1\text{-}SE,im}$) und der Spannung ($\hat{U}_{S1,re}$, $\hat{U}_{S1,im}$) für Leiter-Leiter- und Leiter-Erde-Schleifen aus den bewerteten Augenblickswerten die Impedanzwerte ($|Z_{L1\text{-}E}(t_n)|$) durch Quotientenbildung erzeugt werden.

**8.** Distanzschutzverfahren nach einem der vorangehenden Ansprüche,
**dadurch gekennzeichnet, daß**

- vor einer Überprüfung der Impedanzwerte in bezug auf die erste (5b) oder ggf. zweite Auslösekennlinie (6b) bei einer Anregung festgestellt wird, ob bei einer dreiphasigen Energieversorgungsleitung

  - eine Leiter-Erde oder eine Leiter-Leiter-Schleife angeregt ist, oder
  - eine Leiter-Leiter-Schleife und gleichzeitig eine Schleife zwischen einem der Leiter der Leiter-Leiter-Schleife und der Erde angeregt sind, oder
  - alle Leiter-Leiter-Schleifen angeregt sind, oder
  - alle Leiter-Leiter- und Leiter-Erde-Schleifen angeregt sind, und

- die Augenblickswerte von Strom und Spannung der festgestellten Schleifen zur Bildung der Impedanzwerte herangezogen werden.

9. Distanzschutzverfahren nach einem der Ansprüche 2 bis 8,
   **dadurch gekennzeichnet, daß**
   für mindestens eine der auf die zweite Auslösekennlinie (6b) folgenden Kennlinien eine polygonale Auslösekennlinie verwendet wird.

10. Distanzschutzverfahren nach einem der vorangehenden Ansprüche,
    **dadurch gekennzeichnet, daß**
    als Maximal-Auslösekennlinie (8b) eine polygonale Auslösekennlinie verwendet wird.

11. Distanzschutzverfahren nach einem der Ansprüche 9 oder 10,
    **dadurch gekennzeichnet, daß**

    - zur Überprüfung der Impedanzwerte im Hinblick auf die polygonale Auslösekennlinie Augenblickswerte des Stromes und der Spannung digitalisiert und in einer digitalen Filteranordnung bewertet werden, die aus zwei linearphasigen, nichtrekursiven Digitalfiltern (FIR-Filter) eines ersten Typs (mit den Gewichtsfaktoren $h_i$) und aus einem Digitalfilter eines zweiten Typs (mit den Gewichtsfaktoren $g_i$) besteht,
    - die einzelnen Gewichtsfaktoren ($h_i$, $g_i$) der FIR-Filter frei vorgegeben werden,
    - ein bei der Bewertung entstandener Fehler mittels eines Korrekturfaktors ($k_c$) korrigiert wird, der als Quotient aus den Amplitudengängen bei Nennfrequenz ($H(\Omega_0), G(\Omega_0)$) der FIR-Filter ersten und zweiten Typs gebildet wird, und
    - Resistanz- und Induktivitätskomponente ($R_{Schleife}$ und $L_{Schleife}$) der Impedanz aus den korrigierten bewerteten Augenblickswerten ermittelt werden.

12. Distanzschutzverfahren nach Anspruch 11,
    **dadurch gekennzeichnet, daß**

    - als linearphasige, nichtrekursive Digitalfilter (FIR-Filter) Filter mit jeweils n+1 Gewichtsfaktoren verwendet werden, wobei n eine ganze Zahl ist, und
    - bei der Überprüfung der Impedanzwerte hinsichtlich der weiteren polygonalen Auslösekennlinie für n ein kleinerer Wert als bei der Überprüfung der Impedanzwerte hinsichtlich der Maximal-Auslösekennlinie herangezogen wird.

**Claims**

1. Distance protection method for detecting short-circuits on a section (A) to be monitored of an electrical power supply line, in which impedance values formed from current and voltage in the event of a short-circuit are checked to see whether they lie inside a specific tripping characteristic in order to obtain a tripping signal for tripping an assigned circuit-breaker (B), **characterised in that**

   - a first tripping characteristic (5b) dimensioned relatively small in relation to the length of the section (A) to be monitored of the power supply line is used, and initially determined impedance values ($|Z_S(t_{10})|$) are checked, with respect to this first tripping characteristic (5b), to see whether they lie inside or outside this tripping characteristic,
   - if the initially determined impedance values ($|Z_S(t_{10})|$) lie inside the first tripping characteristic (5b), the tripping signal for tripping the circuit-breaker (B) is generated,

- if the initially determined impedance values ($|Z_S(t_{10})|$) lie outside this tripping characteristic (5b), a maximum tripping characteristic (8b) corresponding approximately to the length of the section (A) to be monitored is switched to, and

- impedance values detected subsequently to the initially determined impedance values are checked to see whether they lie inside the maximum tripping characteristic (8b), and the tripping signal for tripping the circuit-breaker (B) is generated if appropriate.


**2.** Distance protection method according to Claim 1, **characterised in that**

- if the initially determined impedance values ($|Z_S(t_{10})|$) lie outside the first tripping characteristic (5b), a second tripping characteristic (6b) which is dimensioned somewhat larger than the first tripping characteristic (5b) but smaller than the maximum tripping characteristic (8b), is switched to,

- further impedance values ($Z_S(t_{12})$) following the initially determined impedance values ($|Z_S(t_{10})|$) are checked to see whether they lie inside or outside this second tripping characteristic (6b),

- if the further impedance values ($Z_S(t_{12})$) lie inside the second tripping characteristic (6b), the tripping signal is generated,

- if the further impedance values ($Z_S(t_{12})$) lie outside the second tripping characteristic (6b), at least one further tripping characteristic (7b) which is larger than the second tripping characteristic (6b), but smaller than the maximum tripping characteristic (8b), is switched to,

- additional impedance values ($Z_S(t_{15})$) following the further impedance values ($Z_S(t_{12})$) are checked to see whether they lie inside this further tripping characteristic (7b),

- if the additional impedance values ($Z_S(t_{15})$) lie inside this further tripping characteristic (7b), the tripping signal is generated, and

- if the additional impedance values ($Z_S(t_{15})$) lie outside this further tripping characteristic (7b), the maximum tripping characteristic (8b) is switched to.


**3.** Distance protection method according to Claim 1 or 2, **characterised in that** a circle, with a centre which is defined by the start of the section (A) to be monitored of the power supply line, is used as the first tripping characteristic (5b).


**4.** Distance protection method according to Claim 1 or 2, **characterised in that**

- a circle which is truncated symmetrically and parallel to the reactance axis (X), with a centre which is defined by the start of the section (A) to be monitored of the power supply line, is used as the first tripping characteristic, and

- the initially determined impedance values are checked to see whether they lie inside the first tripping characteristic according to their magnitude and their resistance component.


**5.** Distance protection method according to one of Claims 2 to 4, **characterised in that**

- a circle which is truncated symmetrically and parallel to the reactance axis (X), with a centre which is defined by the start of the section (A) to be monitored of the power supply line, is used as the second tripping characteristic (6b), and

- the further impedance values ($Z_S(t_{12})$) are checked to see whether they lie inside this tripping characteristic (6b) according to their magnitude ($|Z_S(t_{12})|$) and their resistance component ($Z_{SR}(t_{12})$).


**6.** Distance protection method according to one of Claims 4 and 5, **characterised in that**

- in order to obtain the resistance component ($Z_R$),
- instantaneous values ($I_{S1}(t_{n-k})$), ($U_{S1}(t_{n-k})$) of the current and the voltage are measured during at least a half period ($T_{2\omega}$) of the mains oscillation of the electrical power supply line,
- instantaneous values of the power are calculated from the instantaneous values ($I_{S1}(t_{n-k})$), ($U_{S1}(t_{n-k})$) of the current and the voltage, and a value ($P_{S1-SE,Act}(t_n)$) proportional to the active power is determined by integration,
- the instantaneous values ($I_{S1}(t_{n-k})$) of the current are squared, and the integral of the squared instantaneous values of the current ($I^2_{2\Sigma,S1}(t_n)$) is determined, and
- the resistance component ($Z_R$) of the impedance is generated from the value ($P_{S1-SE,Act}(t_n)$) proportional to the active power and the value of the integral ($I^2_{2\Sigma,S1}(t_n)$) of the squared current by taking the ratio.

7.  Distance protection method according to one of Claims 3 to 6, **characterised in that**

    -   in order to form the impedance values ($|Z_{L1-E}(t_n)|$),

        -   the instantaneous values ($I_{S1}(t_i)$, $I_{SE}(t_i)$) of the individual conductor currents and of the earth current, as well as the instantaneous values ($u_{S1}(t_i)$) of the voltages between respectively two conductors and between respectively one conductor and earth, are digitised and weighted in respectively a digital filter unit which consists of at least one linear-phase non-recursive digital filter (FIR filter) of a first type (11a, 11b, 18) and at least one linear-phase non-recursive digital filter (FIR filter) of a second type (12a, 12b, 19),
        -   the weighting of the instantaneous values by the digital filters respectively of the first or second type (11a, 11b, 12a, 12b, 18, 19) causes a phase rotation such that the instantaneous values ($\hat{I}_{S1,re}$, $\hat{I}_{SE,re}$, $\hat{U}_{S1,re}$ and $\hat{I}_{S1,im}$, $\hat{I}_{SE,im}$, $\hat{U}_{S1,im}$) weighted by the digital filters of the first type (11a, 11b, 18), on the one hand, and the second type (12a, 12b, 19), on the other hand, are mutually orthogonal, and
        -   by means of determining real and imaginary components of the amplitudes of the current ($\hat{I}_{S1-SE,re}$, $\hat{I}_{S1-SE,im}$) and of the voltage ($\hat{U}_{S1,re}$, $\hat{U}_{S1,im}$) for conductor-conductor and conductor-earth loops from the weighted instantaneous values, the impedance values ($|Z_{L1-E}(t_n)|$) are generated by taking the ratio.

8.  Distance protection method according to one of the preceding claims, **characterised in that**

    -   before checking the impedance values with reference to the first tripping characteristic (5b) and, if appropriate, the second tripping characteristic (6b), identification is carried out during an activation to see whether, in the case of a three-phase power supply line,

        -   a conductor-earth loop or a conductor-conductor loop is activated, or
        -   a conductor-conductor loop and simultaneously a loop between one of the conductors of the conductor-conductor loop and the earth are activated, or
        -   all the conductor-conductor loops are activated, or
        -   all the conductor-conductor loops and all the conductor-earth loops are activated, and

    -   the instantaneous values of the current and voltage of the identified loops are employed to form the impedance values.

9.  Distance protection method according to one of Claims 2 to 8, **characterised in that** a polygonal tripping characteristic is used for at least one of the characteristics following the second tripping characteristic (6b).

10. Distance protection method according to one of the preceding claims, **characterised in that** the maximum tripping characteristic (8b) is a polygonal tripping characteristic.

11. Distance protection method according to one of Claims 9 and 10, **characterised in that**

    -   in order to check the impedance values in relation to the polygonal tripping characteristic, instantaneous values of the current and the voltage are digitised and weighted in a digital filter arrangement, which consists of two linear-phase, non-recursive digital filters (FIR filters) of a first type (with the weighting factors $h_i$) and of one digital filter of a second type (with the weighting factors $g_i$),
    -   the individual weighting factors ($h_i$, $g_i$) of the FIR filters are freely specified,
    -   an error produced during the weighting is corrected by means of a correction factor ($k_c$), which is formed as a ratio from the amplitude responses at the rated frequency ($H(\Omega_0)$, $G(\Omega_0)$) of the FIR filters of the first and second types, and
    -   resistance and inductance components ($R_{loop}$ and $L_{loop}$) of the impedance are determined from the corrected, weighted instantaneous values.

12. Distance protection method according to Claim 11, **characterised in that**

    -   filters with respectively n+1 weighting factors are used as the linear-phase, non-recursive digital filters (FIR filters), n being an integer, and
    -   when checking the impedance values with respect to the further polygonal tripping characteristic, a smaller value is employed for n than when checking the impedance values with respect to the maximum tripping characteristic.

**Revendications**

1.  Procédé de protection de distance pour la détection de courts-circuits sur un tronçon à surveiller (A) d'une ligne d'alimentation en énergie électrique, dans lequel, pour l'obtention d'un signal de déclenchement pour le déclenchement d'un disjoncteur associé (B), on teste des valeurs d'impédance formées à partir du courant et de la tension en cas de court-circuit pour savoir si elles se trouvent à l'intérieur d'une courbe caractéristique de déclenchement prédéterminée,
    **caractérisé par le fait que**

    - on utilise une première courbe caractéristique de déclenchement (5b) dimensionnée relativement petite du point de vue de la longueur du tronçon à surveiller (A) de la ligne d'alimentation en énergie et on teste des valeurs d'impédance d'abord déterminées ($| Z_S (t_{10}) |$) du point de vue de cette première courbe caractéristique de déclenchement (5b) pour savoir si elles se trouvent à l'intérieur ou à l'extérieur de cette courbe caractéristique de déclenchement,
    - si les valeurs d'impédance d'abord déterminées ($| ( Z_S (t_{10}) |$) se trouvent à l'intérieur de la première courbe caractéristique de déclenchement (5b), on produit le signal de déclenchement pour le déclenchement du disjoncteur (B),
    - si les valeurs d'impédance d'abord déterminées ($| Z_S (t_{10}) |$) se trouvent à l'extérieur de cette courbe caractéristique de déclenchement (5b), on commute sur une courbe caractéristique de déclenchement maximale (8b) correspondant sensiblement à la longueur du tronçon à surveiller (A), et
    - on teste des valeurs d'impédance qui suivent les valeurs d'impédance d'abord déterminées pour savoir si elles se trouvent à l'intérieur de la courbe caractéristique de déclenchement maximale (8b) et on produit éventuellement le signal de déclenchement pour le déclenchement du disjoncteur (B).

2.  Procédé de protection de distance selon la revendication 1,
    **caractérisé par le fait que**

    - si les valeurs d'impédance d'abord déterminées ($| Z_S (t_{10}) |$) se trouvent à l'extérieur de la première courbe caractéristique de déclenchement (5b), on commute sur une deuxième courbe caractéristique de déclenchement (6b) dimensionnée un peu plus grande que la première courbe caractéristique de déclenchement (5b) mais plus petite que la courbe caractéristique de déclenchement maximale (8b),
    - on teste d'autres valeurs d'impédance ($Z_S (t_{12})$) qui suivent les valeurs d'impédance d'abord déterminées ($| Z_S (t_{10}) |$) pour savoir si elles se trouvent à l'intérieur ou à l'extérieur de cette deuxième courbe caractéristique de déclenchement (6b),
    - si les autres valeurs d'impédance ($Z_S (t_{12})$) se trouvent à l'intérieur de la deuxième courbe caractéristique de déclenchement (6b), on produit le signal de déclenchement,
    - si les autres valeurs d'impédance ($Z_S (t_{12})$) se trouvent à l'extérieur de la deuxième courbe caractéristique de déclenchement (6b), on commute sur au moins une autre courbe caractéristique de déclenchement (7b) qui est plus grande que la deuxième courbe caractéristique de déclenchement (6b) mais plus petite que la courbe caractéristique de déclenchement maximale (8b),
    - on teste des valeurs d'impédance supplémentaires ($Z_S (t_{15})$) qui suivent les autres valeurs d'impédance ($Z_S (t_{12})$) pour savoir si elles se trouvent à l'intérieur de cette autre courbe caractéristique de déclenchement (7b),
    - si les valeurs d'impédance supplémentaires ($Z_S (t_{15})$) se trouvent à l'intérieur de cette autre courbe caractéristique de déclenchement (7b), on produit le signal de déclenchement, et
    - si les valeurs d'impédance supplémentaires ($Z_S (t_{15})$) se trouvent à l'extérieur de cette autre courbe caractéristique de déclenchement (7b), on commute sur la courbe caractéristique de déclenchement maximale (8b).

3.  Procédé de protection de distance selon la revendication 1 ou 2,
    **caractérisé par le fait qu'**on utilise comme première courbe caractéristique de déclenchement (5b) un cercle avec un centre qui est défini par le début du tronçon à surveiller (A) de la ligne d'alimentation en énergie.

4.  Procédé de protection de distance selon la revendication 1 ou 2,
    **caractérisé par le fait que**

    - on utilise comme première courbe caractéristique de déclenchement un cercle qui est coupé symétriquement et parallèlement par rapport à l'axe de réactance (X) et qui a un centre défini par le début du tronçon à surveiller (A) de la ligne d'alimentation en énergie, et
    - on teste les valeurs d'impédance d'abord déterminées pour savoir si elles se trouvent avec leur valeur absolue et leur composante de résistance à l'intérieur de la première courbe caractéristique de déclenchement.

**5.** Procédé de protection de distance selon l'une des revendications 2 à 4,
**caractérisé par le fait que**

- on utilise comme deuxième courbe caractéristique de déclenchement (6b) un cercle qui est coupé symétriquement et parallèlement par rapport à l'axe de réactance (X) et qui a un centre défini par le début du tronçon à surveiller (A) de la ligne d'alimentation en énergie, et
- on teste les autres valeurs d'impédance ($Z_S$ ($t_{12}$)) pour savoir si elles se trouvent avec leur valeur absolue (| $Z_S$ ($t_{12}$) |) et leur composante de résistance ($Z_{SR}$ ($t_{12}$)) à l'intérieur de cette courbe caractéristique de déclenchement (6b).

**6.** Procédé de protection de distance selon l'une des revendications 4 ou 5,
**caractérisé par le fait que**

- pour l'obtention de la composante de résistance ($Z_R$),

  - on mesure des valeurs instantanées ($I_{S1}$ ($t_{n-k}$)), ($U_{S1}$ ($t_{n-k}$)) du courant et de la tension pendant au moins une demi-période ($T_{2\omega}$) de l'oscillation de réseau de la ligne d'alimentation en énergie électrique,
  - on calcule la puissance à partir des valeurs instantanées ($I_{S1}$ ($t_{n-k}$), $U_{S1}$ ($t_{n-k}$)) du courant et de la tension et on détermine par intégration une valeur proportionnelle à la puissance active ($P_{S1\text{-}SE,Wirk}$ ($t_n$)),
  - on élève au carré les valeurs instantanées ($I_{S1}$ ($t_{n-k}$)) du courant et on détermine l'intégrale du carré des valeurs instantanées ($I_{\Sigma,S1}^2$ ($t_n$)), et
  - on produit la composante de résistance ($Z_R$) de l'impédance à partir de la valeur proportionnelle à la puissance active ($P_{S1\text{-}SE,Wirk}$ ($t_n$)) et de la valeur de l'intégrale du carré du courant ($I_{\Sigma,S1}^2$ ($t_n$)) en formant le quotient des deux.

**7.** Procédé de protection de distance selon l'une des revendications 3 à 6,
**caractérisé par le fait que**

- pour la formation des valeurs d'impédance (| $Z_{L1\text{-}E}$ ($t_n$) |)

  - on numérise des valeurs instantanées ($I_{S1}$ ($t_i$), $I_{SE}$ ($t_i$)) des différents courants de conducteurs et du courant de fuite ainsi que les valeurs instantanées ($U_{S1}$ ($t_i$)) des tensions entre à chaque fois deux conducteurs et entre à chaque fois un conducteur et la terre et on les évalue à chaque fois dans une unité de filtrage numérique qui est constituée d'au moins un filtre numérique non récursif à phase linéaire (filtre FIR) d'un premier type (11a, 11b, 18) et d'au moins un filtre numérique non récursif à phase linéaire (filtre FIR) d'un deuxième type (12a, 12b, 19),
  - l'évaluation des valeurs instantanées ($\hat{I}_{S1,re}$, $\hat{I}_{SE,re}$, $\hat{U}_{S1,re}$ et $\hat{I}_{S1,im}$, $\hat{I}_{SE,im}$, $\hat{U}_{S1,im}$) par les filtres numériques respectivement du premier ou du deuxième type (11a, 11b, 12a, 12b, 18, 19) provoque une rotation de phase de telle sorte que les valeurs instantanées évaluées par les filtres numériques du premier type (11a, 11b, 18) d'une part et du deuxième type (12a, 12b, 19) d'autre part sont orthogonales les unes aux autres, et
  - au moyen de la détermination de composantes réelles et imaginaires des amplitudes du courant ($\hat{I}_{S1\text{-}SE,re}$, $\hat{I}_{S1\text{-}SE,im}$) et de la tension ($\hat{U}_{S1,re}$, $\hat{U}_{S1,im}$) pour des boucles conducteur-conducteur et conducteur-terre, on produit à partir des valeurs instantanées évaluées les valeurs d'impédance (| $Z_{L1\text{-}E}$ ($t_n$) |) en formant un quotient.

**8.** Procédé de protection de distance selon l'une des revendications précédentes,
**caractérisé par le fait que**

- avant un test des valeurs d'impédance par rapport à la première (5b) ou éventuellement à la deuxième courbe caractéristique de déclenchement (6b), on détermine lors d'une excitation si, dans le cas d'une ligne d'alimentation d'énergie triphasée,

  - une boucle conducteur-terre ou une boucle conducteur-conducteur est excitée, ou
  - une boucle conducteur-conducteur et en même temps une boucle entre l'un des conducteurs de la boucle conducteur-conducteur et la terre sont excitées, ou

- toutes les boucles conducteur-conducteur sont excitées, ou
- toutes les boucles conducteur-conducteur et conducteur-terre sont excitées, et

- on exploite les valeurs instantanées du courant et de la tension des boucles déterminées pour la formation des valeurs d'impédance.

9. Procédé de protection de distance selon l'une des revendications 2 à 8,
   **caractérisé par le fait que**, pour au moins l'une des courbes caractéristiques qui suivent la deuxième courbe caractéristique de déclenchement (6b), on utilise une courbe caractéristique de déclenchement polygonale.

10. Procédé de protection de distance selon l'une des revendications précédentes,
    **caractérisé par le fait qu'**on utilise une courbe caractéristique de déclenchement polygonale comme courbe caractéristique de déclenchement maximale (8b).

11. Procédé de protection de distance selon l'une des revendications 9 ou 10,
    **caractérisé par le fait que**

- pour le test des valeurs d'impédance du point de vue de la courbe caractéristique de déclenchement polygonale, on numérise des valeurs instantanées du courant et de la tension et on les évalue dans un dispositif de filtrage numérique qui est constitué de deux filtres numériques non récursifs à phase linéaire (filtres FIR) d'un premier type (avec les facteurs de pondération $h_i$) et d'un filtre numérique d'un deuxième type (avec les facteurs de pondération $g_i$),
- on prescrit librement les différents facteurs de pondération ($h_i$, $g_i$) des filtres FIR,
- on corrige une erreur formée lors de l'évaluation au moyen d'un facteur de correction ($k_c$) qui est formé comme le quotient des caractéristiques d'amplitudes à la fréquence nominale ($H(\Omega_0)$, $G(\Omega_0)$) des filtres FIR du premier et du deuxième type, et
- on détermine les composantes de résistance et d'inductance ($R_{Schleife}$ et $L_{Schleife}$) de l'impédance à partir des valeurs instantanées évaluées et corrigées.

12. Procédé de protection de distance selon la revendication 11,
    **caractérisé par le fait que**

- on utilise comme filtres numériques non récursifs à phase linéaire (filtres FIR) des filtres ayant chacun $n + 1$ facteurs de pondération, $n$ étant un nombre entier, et
- lors du test des valeurs d'impédance du point de vue de l'autre courbe caractéristique de déclenchement polygonale, on exploite pour $n$ une plus petite valeur que lors du test des valeurs d'impédance du point de vue de la courbe caractéristique de déclenchement maximale.

FIG 1

EP 0 878 045 B1

FIG 3

FIG 2

FIG 4

FIG 5

EP 0 878 045 B1